# EUROPÄISCHE PATENTSCHRIFT

(11) **EP 3 023 673 B1**
(45) Veröffentlichungstag und Bekanntmachung des Hinweises auf die Patenterteilung: **31.01.2018**
(21) Anmeldenummer: 14194537.8
(22) Anmeldetag: 24.11.2014
(51) Int. Cl.: F16H 57/04, F16H 57/025, F16H 57/033, F16H 57/02

(54) **Antriebsstrang und Adaptereinrichtung**
Drive train and adapter device
Chaîne cinématique et dispositif adaptateur

(43) Veröffentlichungstag der Anmeldung: 25.05.2016
(73) Patentinhaber: Siemens Aktiengesellschaft, 80333 München (DE)
(72) Erfinder: Schnurr, Wolfgang, 72147 Nehren (DE)

(56) Entgegenhaltungen:
- DE-A1-102007 024 511
- JP-A- 2001 253 257
- JP-A- 2010 031 981
- JP-U- S62 126 657

## Beschreibung

Die vorliegende Erfindung betrifft einen Antriebsstrang umfassend einen Motor mit einem Motorgehäuse und einer Motorwelle, ein Getriebe mit einem Getriebegehäuse, einer Antriebswelle und einer Abtriebswelle, eine zwischen dem Motor und dem Getriebe angeordnete Adaptereinrichtung, die ein mit dem Motorgehäuse und dem Getriebegehäuse lösbar verbundenes Adaptergehäuse und eine die Motorwelle und die Antriebswelle miteinander verbindende Kupplungseinrichtung aufweist, und zumindest eine Kühlmittelversorgung, an die wenigstens eine Kühlpatrone angeschlossen ist, wobei die Kühlpatrone derart angeordnet ist, dass sie während des bestimmungsgemäßen Betriebs des Antriebsstrangs innerhalb des Getriebegehäuses vorhandenes Öl kühlt. Ferner betrifft die vorliegende Erfindung eine Adaptereinrichtung mit einem Adaptergehäuse und einer Kupplungseinrichtung zum Verbinden einer Motorwelle und einer Antriebswelle eines Getriebes.

Antriebsstränge und Adaptereinrichtungen der eingangs genannten Art sind im Stand der Technik in unterschiedlichsten Ausgestaltungen bekannt. Adaptereinrichtungen werden dazu eingesetzt, einen vorbestimmten Motor mit einem vorbestimmten Getriebe zu paaren. Mit einer Mehrzahl solcher Adaptereinrichtungen können entsprechend Antriebsstrangbaureihen realisiert werden, bei denen ein einzelner Motor mit mehreren Getrieben und/oder ein einzelnes Getriebe mit mehreren Motoren verbunden werden kann bzw. können. Ferner ist im Stand der Technik der Einsatz von so genannten Kühlpatronen bekannt, um Wärme aus dem Getriebe abzuführen, die insbesondere durch Reibungs- und Planschverluste entstehen. So sind beispielsweise MOTOX-Getriebe der Siemens AG mit an eine Kühlwasserversorgung angeschlossenen Kühlpatronen ausgestattet. Die Montage der Kühlpatronen erfolgt über einen Getriebemontagedeckel, der normalerweise vor den langsam laufenden Getriebestufen des Getriebes angeordnet ist.

Weitere Antriebsstränge sind in den Druckschriften JP 2001253257 A, JP S62 126657 U, JP 2010031981 A und DE 10 2007 024 511 A1 offenbart. Die Druckschrift JP S62 126657 U offenbart einen Antriebsstrang nach dem Oberbegriff des Anspruchs 1 und eine Adaptereinrichtung nach dem Oberbegriff des Anspruchs 8. Ausgehend von diesem Stand der Technik ist es eine Aufgabe der vorliegenden Erfindung, einen Antriebsstrang und eine Adaptereinrichtung der eingangs genannten Art mit einem alternativen Aufbau zu schaffen.

Zur Lösung dieser Aufgabe schafft die vorliegende Erfindung einen Antriebsstrang der eingangs genannten Art, der dadurch gekennzeichnet ist, dass die Kühlpatrone an dem Adaptergehäuse befestigt ist. Die Befestigung der Kühlpatrone an dem Adaptergehäuse ist zum einen dahingehend von Vorteil, dass im Bereich des Adaptergehäuses ausreichend Bauraum zur Verfügung steht. Entsprechend lässt sich die wenigstens eine Kühlpatrone konstruktiv ohne große Probleme unterbringen. Zudem können Kühlpatronen bei bestehenden Antriebssträngen auch ohne großen Aufwand nachgerüstet werden. Handelt es sich bei dem Getriebe um ein Untersetzungsgetriebe, ist die Anordnung der Kühlpatrone an dem Adaptergehäuse zum anderen dahingehend von Vorteil, dass die Positionierung der Kühlpatrone automatisch im Bereich der schnell laufenden Eingangsstufe des Getriebes erfolgt, so dass die Kühlpatrone aufgrund der stärkeren Ölbewegung mit sehr gutem Wirkungsgrad arbeiten kann. Die Kühlpatrone kann derart angeordnet sein, dass sie direkt in den im unteren Bereich des Getriebegehäuses vorhandenen Ölsumpf eintaucht. Alternativ kann sie aber auch derart angeordnet sein, dass sie das Spritzöl bzw. den Ölnebel kühlt.

Das Adaptergehäuse ist bevorzugt an das Motorgehäuse und an das Getriebegehäuse angeflanscht. Auf diese Weise wird ein stabiler Aufbau des Antriebsstrangs gewährleistet.

Vorteilhaft ist die Kühlpatrone lösbar an dem Adaptergehäuse befestigt, so dass diese problemlos ausgetauscht oder gewartet werden kann.

Gemäß einer Ausgestaltung der vorliegenden Erfindung ist die Kühlpatrone mit einem Außengewinde versehen, das in eine an dem Adaptergehäuse ausgebildete Gewindebohrung geschraubt ist, wodurch ein einfacher Aufbau erzielt wird.

Gemäß einer Variante der vorliegenden Erfindung ist zumindest ein Gewindestopfen vorgesehen, der derart ausgebildet ist, dass er anstelle der Kühlpatrone in die Gewindebohrung geschraubt werden kann. Entsprechend lässt sich wahlweise ein Antriebsstrang mit und ohne Kühlpatrone realisieren. Alternativ kann die Kühlpatrone aber auch an die Prozesskühlung der Anlage angeschlossen sein.

Vorteilhaft stellt der erfindungsgemäße Antriebsstrang einen Teil einer Getriebebaureihe dar, die verschiedene Motoren, verschiedene Getriebe und verschiedene Adaptereinrichtungen zum wahlweisen Verbinden der Motoren und Getriebe aufweist.

Erfindungsgemäß ist die Kühlpatrone an einer Wandung des Adaptergehäuses befestigt, durch die sich die Kupplungseinrichtung erstreckt. Dank der guten Zugänglichkeit einer solchen Wandung lässt sich die Kühlpatrone einfach montieren und demontieren. Darüber hinaus kann die Kühlpatrone einen einfachen stabförmigen Aufbau aufweisen.

Vorteilhaft ist die Kühlpatrone an eine Kühlmittelversorgung des Motors angeschlossen. Da der Motor unmittelbar benachbart zu der Adaptereinrichtung angeordnet ist, lässt sich ein solcher Anschluss der Kühlpatrone an die Kühlmittelversorgung des Motors in einfacher Art und Weise mit wenig Materialaufwand realisieren.

Ferner schafft die vorliegende Erfindung zur Lösung der eingangs genannten Aufgabe eine Adaptereinrichtung der eingangs genannten Art, die dadurch gekennzeichnet ist, dass diese zumindest eine an dem Adaptergehäuse befestigte Kühlpatrone aufweist, die dazu ausgelegt ist, im bestimmungsgemäß montierten Zustand der Adaptereinrichtung einen Ölsumpf des Getriebes zu kühlen.

Bevorzugt ist die Kühlpatrone lösbar an dem Adaptergehäuse befestigt. So kann die Kühlpatrone insbesondere mit einem Außengewinde versehen sein, das in eine an dem Adaptergehäuse ausgebildete Gewindebohrung geschraubt ist.

Erfindungsgemäß ist die Kühlpatrone an einer Wandung des Adaptergehäuses befestigt, durch die sich die Kupplungseinrichtung erstreckt.

Bevorzugt ist das Adaptergehäuse mit einer sich durch eine Gehäusewandung erstreckenden Kühlmittelzuleitung und einer sich durch die Gehäusewandung erstreckenden Kühlmittelableitung versehen, an welche die Kühlpatrone angeschlossen werden kann. Die Position der Kühlmittelzuleitung und der Kühlmittelableitung sollte derart gewählt sein, dass diese gut zugänglich sind.

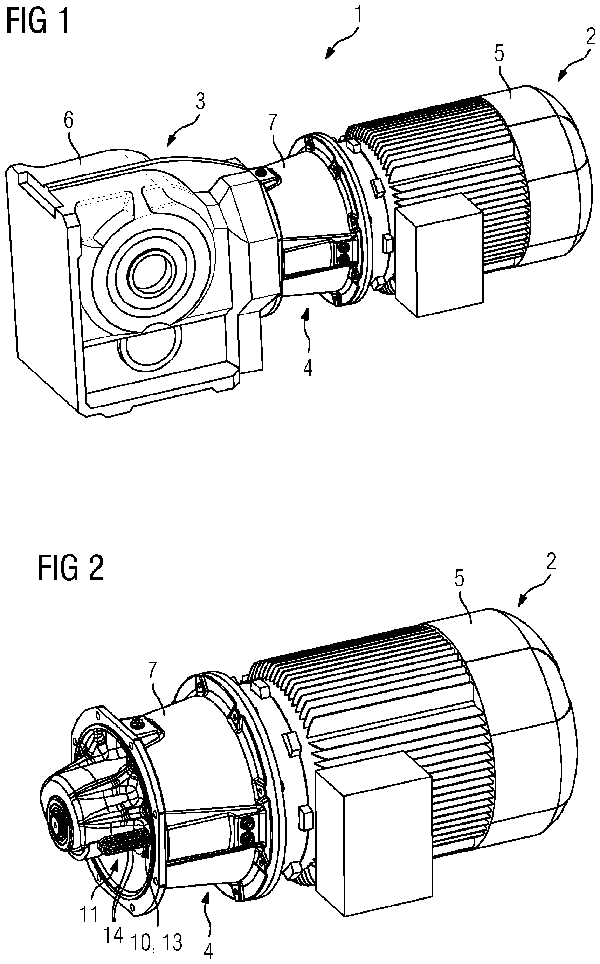

Weitere Merkmale und Vorteile der vorliegenden Erfindung werden anhand der nachfolgenden Beschreibung eines Ausführungsbeispiels der vorliegenden Erfindung unter Bezugnahme auf die beiliegende Zeichnung deutlich. Darin ist
- Figur 1: eine schematische perspektivische Ansicht eines Antriebsstrangs gemäß einer Ausführungsform der vorliegenden Erfindung;
- Figur 2: eine perspektivische Ansicht eines Motors und einer Adaptereinrichtung des in Figur 1 dargestellten Antriebsstrangs; und

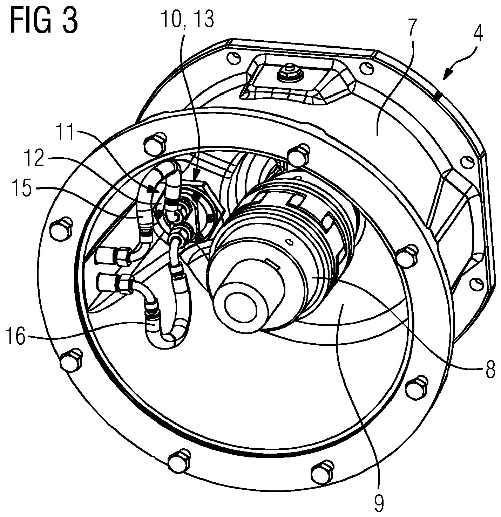

- Figur 3: eine perspektivische Ansicht der Adaptereinrichtung des in Figur 1 dargestellten Antriebsstrangs, wenn diese von der Seite des Motors in Richtung des Getriebes betrachtet wird.

Die Figuren zeigen einen Antriebsstrang 1 gemäß einer Ausführungsform der vorliegenden Erfindung, der als Hauptkomponenten einen Motor 2, ein Getriebe 3 und eine Adaptereinrichtung 4 aufweist.

Der Antriebsstrang 1 kann einen Teil einer Getriebebaureihe darstellen, die mehrere verschiedene Motoren, Getriebe und Adaptereinrichtungen aufweist, die bedarfsgerecht miteinander gepaart werden können.

Der Motor 2 dient als Antriebseinheit und umfasst ein Motorgehäuse 5 und eine nicht näher dargestellte Motorwelle.

Bei dem Getriebe 3 handelt es sich um ein Untersetzungsgetriebe mit einem Getriebegehäuse 6. Das Getriebe 3 umfasst in bekannter Weise eine Antriebswelle und eine Abtriebswelle, auch wenn diese vorliegend nicht dargestellt sind.

Die Adaptereinrichtung 4 ist zwischen dem Motor 2 und dem Getriebe 3 angeordnet. Sie weist ein Adaptergehäuse 7 auf, das an das Motorgehäuse 5 und an das Getriebegehäuse 6 angeflanscht ist, wobei sich durch das Adaptergehäuse 7 eine Kupplungseinrichtung 8 erstreckt, welche die Motorwelle mit der Antriebswelle des Getriebes 3 verbindet. Die Kupplungseinrichtung 8 erstreckt sich durch eine Wandung 9 der Adaptereinrichtung 4, die eine Trennwand zwischen dem Motor 2 und dem Getriebe 3 definiert und durch die sich außermittig eine Gewindebohrung 10 erstreckt.

Zur Abfuhr der während des Betriebs des Antriebsstrangs 1 im Getriebe 3 entstehenden Wärme, die insbesondere durch Reibungs- und Planschverluste erzeugt wird, ist eine Kühlpatrone 11 vorgesehen. Die Kühlpatrone 11 umfasst einen Kühlpatronenkopf 12, der ein Außengewinde 13 sowie nicht näher dargestellte Kühlmittelanschlüsse aufweist. Die Kühlmittelanschlüsse sind fluidtechnisch mit im Wesentlichen U-förmig ausgebildeten Kühlmittelleitungen 14 verbunden, die sich ausgehend von dem Kühlpatronenkopf 12 auswärts erstrecken. Die Kühlpatrone 11 ist ausgehend von der Seite des Motors 2 durch die in der Wandung 9 der Adaptereinrichtung 4 vorgesehene Gewindebohrung 10 eingesetzt und mit dieser verschraubt. Entsprechend stehen die Kühlmittelleitungen 14 auswärts in Richtung des Getriebes 3 vor. Die Position der Gewindebohrung 10 ist dabei derart gewählt, dass die Kühlmittelleitungen 14 während des bestimmungsgemäßen Betriebs des Antriebsstrangs 1 vollständig in den Ölsumpf des Getriebes 3 eintauchen. Alternativ kann die Kühlpatrone 11 aber auch weiter oberhalb angeordnet werden, so dass sie das Spritzöl bzw. den Ölnebel kühlt. Die Kühlmittelanschlüsse der Kühlpatrone 11 sind mit einer Kühlmittelzuleitung 15 und einer Kühlmittelableitung 16 verbunden, die sich durch das Adaptergehäuse 7 erstrecken und an eine nicht näher dargestellte Kühlmittelversorgung des Motors 2 angeschlossen sind.

Während des Betriebs des Antriebsstrangs 1 wird Kühlmittel beispielsweise in Form von Kühlwasser durch die Kühlmittelleitungen 14 der Kühlpatrone 11 geleitet. Das Kühlmittel entzieht dem Öl des Getriebes 3 Wärme und führt diese ab. Durch die direkte Wärmeübertragung von Öl zur Kühlpatrone wird eine optimale Getriebekühlung erzielt. Die Kühlleistung der Kühlpatrone 11 lässt sich durch die Temperatur des zugeführten Kühlmittels sowie durch den Volumenstrom des Kühlmittels einstellen. Es sollte klar sein, dass mehrere Kühlpatronen 11 vorgesehen werden können, sollte die Kühlleistung einer einzelnen Kühlpatrone 11 nicht ausreichend sein.

Für den Fall, dass gar keine Kühlung erforderlich ist, also die freie Konvektion zur Kühlung des Getriebes 3 ausreichend ist, kann anstelle der Kühlpatrone 11 ein Gewindestopfen in die in der Wandung 9 in das Adaptergehäuse 7 vorgesehene Gewindebohrung 10 eingesetzt werden.

Dank des Einsatzes der Kühlpatrone 11 kann die Ölalterung gesenkt werden, was mit längeren Ölwechselfristen einhergeht. Ein wesentlicher Vorteil des zuvor beschriebenen Aufbaus des Antriebsstrangs 1 besteht darin, dass die Kühlpatrone 11 an dem Adaptergehäuse 7 der Adaptereinrichtung 4 und somit an einer Position befestigt ist, an der ausreichend Bauraum zur Verfügung steht. Entsprechend lässt sich die Unterbringung der Kühlpatrone 11 konstruktiv einfach realisieren. Darüber hinaus können auch Adaptereinrichtungen, die bislang nicht mit einer Kühlpatrone versehen sind, in einfacher Art und Weise nachgerüstet werden. Ein weiterer Vorteil der Positionierung der Kühlpatrone 11 an dem Adaptergehäuse 7 besteht darin, dass die Kühlpatrone 11 automatisch im Bereich der schnelllaufenden Eingangsstufe positioniert ist, so dass die Kühlpatrone 11 mit einem sehr guten Leistungsgrad betrieben werden kann. Darüber hinaus erfolgt die Kühlung vornehmlich in dem schnelllaufenden Bereich des Getriebes 3, so dass die Dichtung der Eingangswelle des Getriebes eine wesentliche Lebensdauersteigerung erfährt, da neben der hohen Drehzahl auch die Temperatur zur Dichtringalterung beiträgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Antriebsstrang (1) umfassend einen Motor (2) mit einem Motorgehäuse (5) und einer Motorwelle, ein Getriebe (3) mit einem Getriebegehäuse (6), einer Antriebswelle und einer Abtriebswelle, eine zwischen dem Motor (2) und dem Getriebe (3) angeordnete Adaptereinrichtung (4), die ein mit dem Motorgehäuse (5) und dem Getriebegehäuse (6) lösbar verbundenes Adaptergehäuse (7) und eine die Motorwelle und die Antriebswelle miteinander verbindende Kupplungseinrichtung (8) aufweist, und zumindest eine Kühlmittelversorgung, an die wenigstens eine Kühlpatrone (11) angeschlossen ist, wobei die Kühlpatrone (11) derart angeordnet ist, dass sie während des bestimmungsgemäßen Betriebs des Antriebsstrangs (1) innerhalb des Getriebegehäuses (6) vorhandenes Öl kühlt, **dadurch gekennzeichnet, dass** die Kühlpatrone (11) an einer Wandung (9) des Adaptergehäuses (7) befestigt ist, durch die sich die Kupplungseinrichtung (8) erstreckt.

2. Antriebsstrang (1) nach Anspruch 1, **dadurch gekennzeichnet, dass** das Adaptergehäuse (7) an das Motorgehäuse (5) und an das Getriebegehäuse (6) angeflanscht ist.

3. Antriebsstrang (1) nach einem der vorhergehenden Ansprüche, **dadurch gekennzeichnet, dass** die Kühlpatrone (11) lösbar an dem Adaptergehäuse (7) befestigt ist.

4. Antriebsstrang (1) nach Anspruch 3, **dadurch gekennzeichnet, dass** die Kühlpatrone (11) mit einem Außengewinde (13) versehen ist, das in eine an dem Adaptergehäuse (7) ausgebildete Gewindebohrung (10) geschraubt ist.

5. Antriebsstrang (1) nach Anspruch 4, **dadurch gekennzeichnet, dass** zumindest ein Gewindestopfen vorgesehen ist, der derart ausgebildet ist, dass er anstelle der Kühlpatrone (11) in die Gewindebohrung (10) geschraubt werden kann.

6. Antriebsstrang (1) nach einem der vorhergehenden Ansprüche, **dadurch gekennzeichnet, dass** die Kühlpatrone (11) an eine Kühlmittelversorgung des Motors (2) angeschlossen ist.

7. Antriebsstrang (1) nach einem der vorhergehenden Ansprüche, **dadurch gekennzeichnet, dass** dieser einen Teil einer Getriebebaureihe darstellt, die verschiedene Motoren, verschiedene Getriebe und verschiedene Kupplungseinrichtungen zum wahlweisen Verbinden der Motoren und Getriebe aufweist.

8. Adaptereinrichtung (4) mit einem Adaptergehäuse (7) und einer Kupplungseinrichtung (8) zum Verbinden einer Motorwelle und einer Antriebswelle eines Getriebes (3), wobei die Adaptereinrichtung (4) zumindest eine Kühlpatrone (11) aufweist, die dazu ausgelegt ist, im bestimmungsgemäß montierten Zustand der Adaptereinrichtung (4) einen Ölsumpf des Getriebes (3) zu kühlen, **dadurch gekennzeichnet, dass** die Kühlpatrone (11) an einer Wandung (9) des Adaptergehäuses (7) befestigt ist, durch die sich die Kupplungseinrichtung (8) erstreckt.

9. Adaptereinrichtung (4) nach Anspruch 8, **dadurch gekennzeichnet, dass** die Kühlpatrone (11) lösbar an dem Adaptergehäuse (7) befestigt ist.

10. Adaptereinrichtung (4) nach Anspruch 9, **dadurch gekennzeichnet, dass** die Kühlpatrone (11) mit einem Außengewinde (13) versehen ist, das in eine an dem Adaptergehäuse (7) ausgebildete Gewindebohrung (10) geschraubt ist.

11. Adaptereinrichtung (4) nach einem der Ansprüche 8 bis 10, **dadurch gekennzeichnet, dass** das Adaptergehäuse (7) mit einer sich durch eine Gehäusewandung erstreckenden Kühlmittelzuleitung (15) und einer sich durch die Gehäusewandung erstreckenden Kühlmittelableitung (16) versehen ist.

## Claims

1. Drive train (1) comprising a motor (2) with a motor housing (5) and a motor shaft, a gear unit (3) with a gear unit housing (6), a drive shaft and a take-off shaft, an adapter device (4) disposed between the motor (2) and the gear unit (3), having an adapter housing (7) detachably connected to the motor housing (5) and the gear unit housing (6) and a coupling device (8) connecting the motor shaft and the drive shaft to one another, and at least one coolant supply, to which at least one cooling cartridge (11) is connected, wherein the cooling cartridge (11) is disposed such that, when the drive train (1) is operating according to specification, it cools oil present within the drive unit housing (6), **characterised in that** the cooling cartridge (11) is fastened to a walling (9) of the adapter housing (7) through which the coupling device (8) extends.

2. Drive train (1) according to claim 1, **characterised in that** the adapter housing (7) is flanged onto the motor housing (5) and onto the gear unit housing (6).

3. Drive train (1) according to one of the preceding claims, **characterised in that** the cooling cartridge (11) is fastened detachably to the adapter housing (7).

4. Drive train (1) according to claim 3, **characterised in that** the cooling cartridge (11) is provided with an outer thread (13), which is screwed into a threaded hole (10) embodied on the adapter housing (7) .

5. Drive train (1) according to claim 4, **characterised in that** at least one threaded plug is provided, which is embodied such that it can be screwed into the threaded hole (10) instead of the cooling cartridge (11).

6. Drive train (1) according to one of the preceding claims, **characterised in that** the cooling cartridge (11) is connected to a coolant supply of the motor (2).

7. Drive train (1) according to one of the preceding claims, **characterised in that** this represents part of a gear unit series, having different motors, different gear units and different coupling devices for optional connection of the motors and gear units.

8. Adapter device (4) with an adapter housing (7) and a coupling device (8) for connecting a motor shaft and a drive shaft of a gear unit (3), wherein the adapter device (4) has at least one cooling cartridge (11), which is designed, in the state in which the adapter device (4) is installed according to specification, to cool an oil sump of the gear unit (3), **characterised in that** the cooling cartridge (11) is fastened to a walling (9) of the adapter housing (7) through which the coupling device (8) extends.

9. Adapter device (4) according to claim 8, **characterised in that** the cooling cartridge (11) is fastened detachably to the adapter housing (7).

10. Adapter device (4) according to claim 9, **characterised in that** the cooling cartridge (11) is provided with an outer thread (13) which is screwed into a threaded hole (10) embodied on the adapter housing (7).

11. Adapter device (4) according to one of claims 8 to 10, **characterised in that** the adapter housing (7) is provided with a coolant feed line (15) and a coolant discharge line (16) extending through a housing wall.

## Revendications

1. Chaîne (1) cinématique, comprenant un moteur (2) ayant un carter (5) et un arbre, une transmission (3) ayant un carter (6), un arbre menant et un arbre mené, un dispositif (4) adaptateur, disposé entre le moteur (2) et la transmission (3), qui a un carter (7) d'adaptateur, assemblé de manière amovible au carter (5) du moteur et au carter (6) de la transmission, et un dispositif (8) d'accouplement reliant entre eux l'arbre du moteur et l'arbre menant, et au moins une alimentation en fluide de refroidissement, à laquelle est raccordée au moins une cartouche (11) de refroidissement, la cartouche (11) de refroidissement étant disposée de manière à refroidir, pendant le fonctionnement conforme aux prescriptions de la chaîne (1) cinématique, de l'huile présente à l'intérieur du carter (6) de la transmission, **caractérisée en ce que** la cartouche (11) de refroidissement est fixée à une paroi (9) du carter (7) de l'adaptateur que le dispositif (8) d'accouplement traverse.

2. Chaîne (1) cinématique suivant la revendication 1, **caractérisée en ce que** le capteur (7) de l'adaptateur est bridé au carter (5) du moteur et au carter (6) de la transmission.

3. Chaîne (1) cinématique suivant l'une des revendications précédentes, **caractérisée en ce que** la cartouche (11) de refroidissement est fixée de manière amovible au carter (7) de l'adaptateur.

4. Chaîne (1) cinématique suivant la revendication 3, **caractérisée en ce que** la cartouche (11) de refroidissement est pourvue d'un filetage (13), qui se visse dans un trou (10) taraudé, constitué sur le carter (7) de l'adaptateur.

5. Chaîne (1) cinématique suivant la revendication 4, **caractérisée en ce qu'**il est prévu au moins un bouchon fileté constitué de manière à pouvoir être vissé dans le trou (10) taraudé au lieu de la cartouche (11) de refroidissement.

6. Chaîne (1) cinématique suivant l'une des revendications précédentes, **caractérisée en ce que** la cartouche (11) de refroidissement est raccordée à une alimentation en fluide de refroidissement du moteur (2).

7. Chaîne (1) cinématique suivant l'une des revendications précédentes, **caractérisée en ce qu'**elle représente une partie d'une série, qui a divers moteurs, diverses transmissions et divers dispositif d'accouplement pour relier, au choix, les moteurs et les transmissions.

8. Dispositif (4) adaptateur, comprenant un carter (7) et un dispositif (8) d'accouplement pour relier un arbre d'un moteur et un arbre menant d'une transmission (3), le dispositif (4) adaptateur ayant au moins une cartouche (11) de refroidissement conçue pour refroidir, lorsque le dispositif (4) adaptateur est à l'état monté conformément aux prescriptions, un puisard d'huile de la transmission (3), **caractérisé en ce que** la cartouche (11) de refroidissement est fixée à une paroi (9) du carter (7) de l'adaptateur que le dispositif (8) d'accouplement traverse.

9. Dispositif (4) adaptateur suivant la revendication 8, **caractérisé en ce que** la cartouche (11) de refroidissement est fixée de manière amovible au carter (7) de l'adaptateur.

10. Dispositif (4) adaptateur suivant la revendication 9, **caractérisé en ce que** la cartouche (11) de refroidissement est pourvue d'un filetage (13), qui se visse dans un trou (10) taraudé, constitué sur le carter (7) de l'adaptateur.

11. Dispositif (4) adaptateur suivant l'une des revendications 8 à 10, **caractérisé en ce que** le carter (7) de l'adaptateur est pourvu d'un conduit (15) d'apport de fluide de refroidissement traversant la paroi du carter et d'un conduit (16) d'évacuation du fluide de refroidissement traversant la paroi du carter.
